# EUROPEAN PATENT APPLICATION

(11) **EP 4 626 091 A1**
(43) Date of publication of application: **01.10.2025**
(21) Application number: 25167019.6
(22) Date of filing: 28.03.2025
(51) Int. Cl.: H04W 52/28, H04W 52/36, H04W 52/02

(54) **APPARATUS AND METHOD FOR POWER SAVING AND TRANSMISSION POWER CONTROL IN AMBIENT IOT SYSTEMS**

(30) Priority: 29.03.2024 US 202463571536 P; 27.03.2025 US 202519092420
(71) Applicant: Samsung Electronics Co., Ltd., Suwon-si, Gyeonggi-do 16677 (KR)
(72) Inventor: FOUAD, Yaser Mohamed Mostafa Kamal, San Jose, CA, 95134 (US); SARTORI, Philippe Jean Marc Michel, San Jose, CA, 95134 (US)
(74) Representative: Kuhnen & Wacker Patent- und Rechtsanwaltsbüro PartG mbB

(57) **Abstract**

A system and a method are disclosed for power saving and power control in ambient IoT systems. A method performed by an ambient IoT device includes receiving, from a reader, a control indication to trigger a D2R transmission and an indication of a target transmission power; determining if the target transmission power is within a power budget of the ambient IoT device; and in response to determining that the target transmission power is within the power budget of the ambient IoT device, performing the D2R transmission at the target transmission power.

## Description

### CROSS-REFERENCE TO RELATED APPLICATION

This application claims the priority benefit under 35 U.S.C. § 119(e) of U.S. Provisional Application No. 63/571,536, filed on March 29, 2024, the disclosure of which is incorporated by reference in its entirety as if fully set forth herein.

### TECHNICAL FIELD

The disclosure generally relates to ambient Internet of things (IoT) systems. More particularly, the subject matter disclosed herein relates to improvements to power saving and power control in ambient IoT systems.

### SUMMARY

In ambient IoT systems, the expectation is that a significantly large number of ambient IoT devices will be deployed. These devices are expected to be much cheaper than narrowband (NB) IoT devices and thus are order(s) of magnitude simpler than their NB-IoT counterparts.

The 3^{rd} generation partnership project (3GPP) has categorized ambient IoT devices by their energy storage capacity and their capability of generating radio frequency (RF) signals for transmissions into 3 categories as follows:
A. Device Type-1: ~1 µW peak power consumption, has energy storage, initial sampling frequency offset (SFO) up to 10X parts per million (ppm), neither downlink (DL) nor uplink (UL) amplification in the device. The device's UL transmission is backscattered on a carrier wave (CW) provided externally.
B. Device Type-2a: ≤ a few hundred µW peak power consumption, has energy storage, initial SFO up to 10X ppm, both DL and/or UL amplification in the device. The device's UL transmission is backscattered on a CW provided externally.
C. Device Type-2b: ≤ a few hundred µW peak power consumption, has energy storage, initial SFO up to 10X ppm, both DL and/or UL amplification in the device. The device's UL transmission is generated internally by the device.

For all device categories (i.e., A, B and C), it is expected that a device will be able to demodulate control and data from a relevant entity in a radio access network (RAN) (e.g., a user equipment (UE) or a gNodeB (gNB)) according to the underlying topology.

Ambient IoT devices are expected to operate in different environments (e.g., outdoor and indoor) and to support a wide range of communication distances (e.g., large distances for outdoor applications and small distances for indoor applications). In order to meet these expectations, several topologies have been introduced in 3GPP to enable IoT devices to communicate with the network:
Topology 1: Base station (BS) ↔ Ambient IoT device

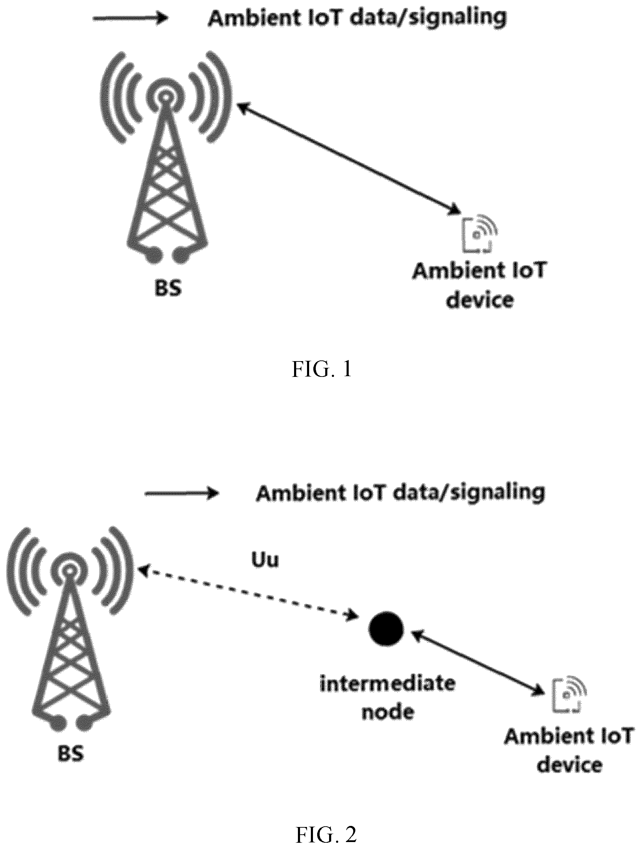

FIG. 1 illustrates an example of ambient IoT topology 1.

Referring to FIG. 1, an ambient IoT device directly communicates with a BS. This communication is bidirectional with no assistance node therebetween. In addition, a UE can receive from one BS and respond to another one.
Topology 2: BS ↔ intermediate node ↔ Ambient IoT device

FIG. 2 illustrates an example of ambient IoT topology 2.

Referring to FIG. 2, an intermediate node (e.g., a relay, integrated access and backhaul (IAB) node, a UE, a repeater, etc.) is provided, which facilitates communication between an ambient IoT device and a BS. The communication between the ambient IoT device and the intermediate device is bidirectional.
Topology 3: BS ↔ assisting node ↔ Ambient IoT device ↔ BS

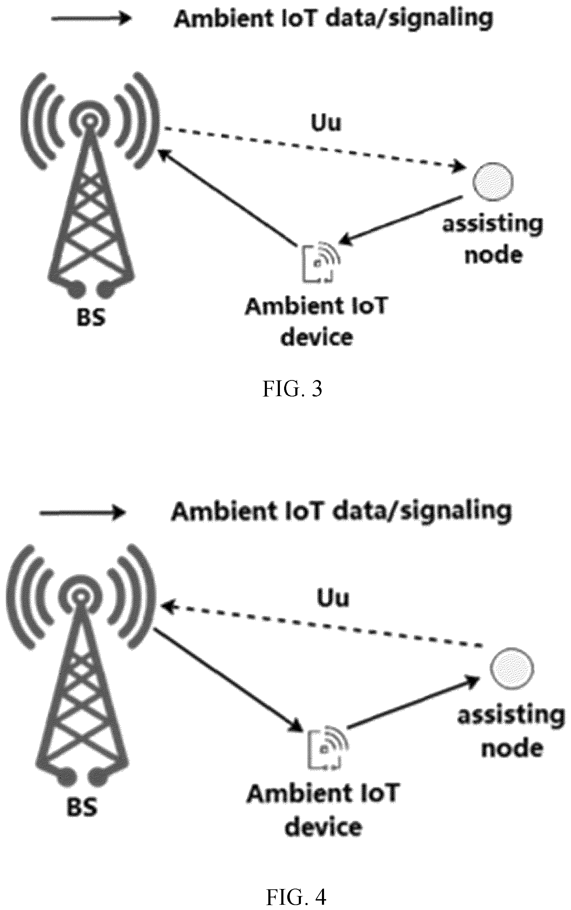

FIG. 3 illustrates an example of ambient IoT topology 3 with DL assistance, and FIG. 4 illustrates an example of ambient IoT topology 3 with UL assistance.

Referring to FIGs. 3 and 4, an intermediate node is provided, which facilitates communication between an ambient IoT device and a BS, similar to Topology 2. However, a key difference is that the communication with the intermediate node is not bidirectional.

For example, in case of UL assistance as illustrated in FIG. 4, the ambient IoT device receives DL communication directly from the BS while sending only UL communication through the intermediate node.
Topology 4: UE ↔ Ambient IoT device

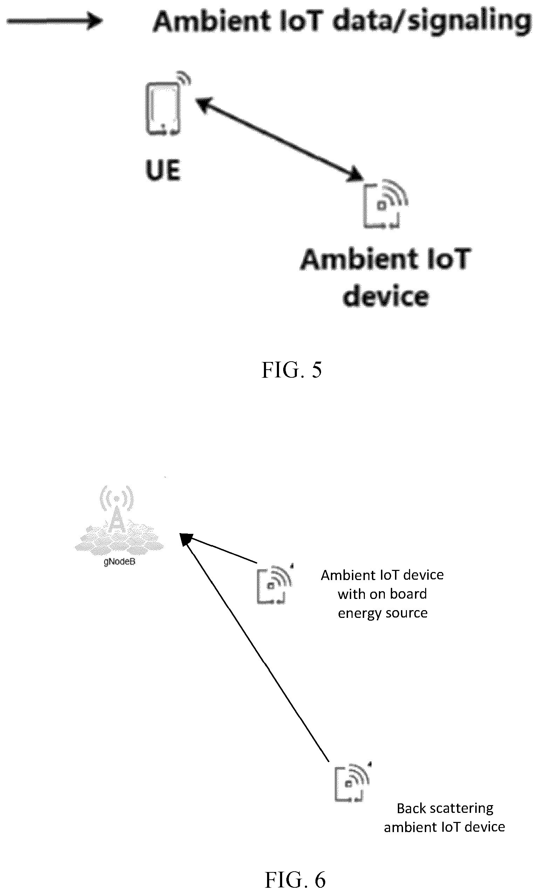

FIG. 5 illustrates an example of ambient IoT topology 4.

Referring to FIG. 5, there is no BS involvement and communication is bidirectional between an ambient IoT device and a nearby UE.

In ambient IoT systems, multiple ambient IoT device types are expected to communicate with a source (or a reader), e.g., a base station such as a gNB. It is also expected that various ambient IoT devices will have different energy storage levels. For example, some ambient IoT devices may have no energy storage and rely only on a received energizing signal from the source for activation and transmission, while other ambient IoT devices may have an onboard energy source and thus can perform device originated UL transmissions. That is, lower end ambient IoT devices have a very limited power budget (~1uW) and rely only on energy harvesting, whereas the higher end ambient IoT devices have a much higher power budget (~100s uW) and can have an internal power source.

Subsequently, this large variation in power can result in lower end devices suffering from intolerable interference. This issue may be more pronounced due to the near far problem, wherein a high end device can be close to the source, whereas the low end device is at a further location from the source. Because these ambient IoT devices are expected to share the same resources when communicating with the source, it is also expected that a large power imbalance may occur at the receiver side.

In addition, the limited power budget of ambient IoT devices and their expected long operational lifetime necessitates power control and conservation techniques to reduce power consumption.

FIG. 6 illustrates an example of a high power imbalance between UL transmissions from different ambient IoT device types occurring at a source.

Referring to FIG. 6, an ambient IoT device with an onboard energy source is located near to a source, i.e., a gNB, and an ambient IoT device with no onboard energy source (i.e., a back scattering ambient IoT device) is located farther from the source, creating the near far problem and a high power imbalance.

This high power imbalance can have an impact on reliability of the UL transmissions performed by the ambient IoT devices. For example, the limited dynamic range of a power amplifier at the source can result in distorting weaker UL signals, even when transmitted on a different UL carrier. This issue may be magnified when the source is an intermediate node (e.g., a UE). Hence, it is essential to control the transmission power of ambient IoT devices when performing their UL transmissions.

In addition, ambient IoT devices are also expected to operate for long durations with their limited energy source. Hence, it is important that these ambient IoT devices can consume minimal power for device activation, sensing, and UL power transmissions to ensure that they can meet their targeted lifetime.

To overcome these issues, systems and methods are described herein minimizing power consumption at ambient IoT devices and reducing the impact of interference between neighboring ambient IoT devices. This helps in improves reliability of UL ambient IoT transmissions and increases their life time (e.g., for devices with no energy harvesting capabilities).

Accordingly, an aspect of the disclosure is to provide a method for reduced sensing of DL transmissions in order to reduce power consumption by ambient IoT devices.

Another aspect of the disclosure is to provide closed loop and open loop power control procedures along with their associated signaling to reduce power imbalance between ambient IoT devices.

Another aspect of the disclosure is to provide techniques to address power leakage between adjacent carriers and to reduce the impact thereof on the performance of ambient IoT devices.

Another aspect of the disclosure is to provide operation techniques for ambient IoT devices that are to perform prioritization between UL/DL or UL/UL transmissions.

Another aspect of the disclosure is to provide techniques related to ambient IoT device capabilities (e.g., a maximum UL power amplification or a maximum number of UL transmissions within a given duration) and methods for signaling the capabilities to a source.

In an embodiment, a method is provided for an ambient IoT device. The method includes receiving, from a reader, a control indication to trigger a device to reader (D2R) transmission and an indication of a target transmission power; determining if the target transmission power is within a power budget of the ambient IoT device; and in response to determining that the target transmission power is within the power budget of the ambient IoT device, performing the D2R transmission at the target transmission power.

In an embodiment, an ambient IoT device is provided, which includes a transceiver; and a processor configured to receive, from a reader, via the transceiver, a control indication to trigger a D2R transmission and an indication of a target transmission power, determine if the target transmission power is within a power budget of the ambient IoT device, and in response to determining that the target transmission power is within the power budget of the ambient IoT device, performing the D2R transmission, via the transceiver, at the target transmission power.

### BRIEF DESCRIPTION OF THE DRAWING

In the following section, the aspects of the subject matter disclosed herein will be described with reference to exemplary embodiments illustrated in the figures, in which:
FIG. 1 illustrates an example of ambient IoT topology 1;
FIG. 2 illustrates an example of ambient IoT topology 2;
FIG. 3 illustrates an example of ambient IoT topology 3 with DL assistance;
FIG. 4 illustrates an example of ambient IoT topology 3 with UL assistance;
FIG. 5 illustrates an example of ambient IoT topology 4;
FIG. 6 illustrates an example of a high power imbalance between UL transmissions from different ambient IoT device types occurring at a source;
FIG. 7 illustrates an example in which an energizing signal and DL control signaling are confined in a small bandwidth to reduce a monitored bandwidth by ambient IoT devices, according to an embodiment;
FIG. 8 illustrates an energizing signal sent on a common carrier and control signaling from different sources being sent on separate carriers, according to an embodiment;
FIG. 9 illustrates a method of energizing signals with different power levels to control UL control signal power, according to an embodiment;
FIG. 10 is a flow chart illustrating a method performed by a source for controlling power of a back scattered signal to reduce interference, according to an embodiment;
FIG. 11 is a flow chart illustrating a method performed by a source for controlling power of a back scattered signal through DL control signaling, according to an embodiment;
FIG. 12 illustrates an example of triggering retransmissions with different power levels, according to an embodiment;
FIG. 13A is a flow chart illustrating a method performed by an ambient IoT device for controlling transmit power of retransmissions, according to an embodiment;
FIG. 13B is a flow chart illustrating a method performed by an intermediate node for controlling transmit power of retransmissions, according to an embodiment;
FIG. 14 is a flow chart illustrating a method performed by an ambient IoT device for selecting a resource pool for transmission, according to an embodiment;
FIG. 15 illustrates an example of applying carrier hopping to reduce power imbalance between neighboring ambient IoT devices, according to an embodiment;
FIG. 16 is a flow chart illustrating a method of resource reselection triggering to avoid high interference between overlapping or adjacent ambient IoT device transmissions with high power imbalance, according to an embodiment;
FIG. 17 illustrates an example of DL pathloss measurements being used for UL power control by an ambient IoT device, according to an embodiment;
FIG. 18 is a flow chart illustrating a method for resource selection with resource exclusion based on energy harvesting and a power budget, according to an embodiment;
FIG. 19 illustrates an example of an overlap between UL and DL transmissions at slot X, according to an embodiment;
FIG. 20 is a flow chart illustrating a method for ambient IoT device transmit power selection based on an a required power level indicated by a source, according to an embodiment;
FIG.21 is a block diagram of an electronic device in a network environment, according to an embodiment; and
FIG. 22 shows a system including a UE and a gNB in communication with each other, according to an embodiment.

### DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

Herein, a transmission from an ambient IoT device to a source (or reader), such as a gNB, may be referred to as a device to reader (D2R) transmission, and a transmission from a source (or reader) to an ambient IoT device may be referred to as a reader to device (D2R) transmission.

### A. Reduced monitoring to reduce ambient IoT device complexity

1. Given the relatively simple designs of ambient IoT devices, it is expected that such devices will have limited capabilities. This is especially true for device Types 1 and 2a. Hence, it is desirable that such devices should monitor only a small portion of an available bandwidth. However, if an ambient IoT device is capable of detecting a small portion of the available bandwidth, it might not be able to detect control/data from a source, thus hindering system performance and the ability of the source to activate/trigger neighboring ambient IoT devices.

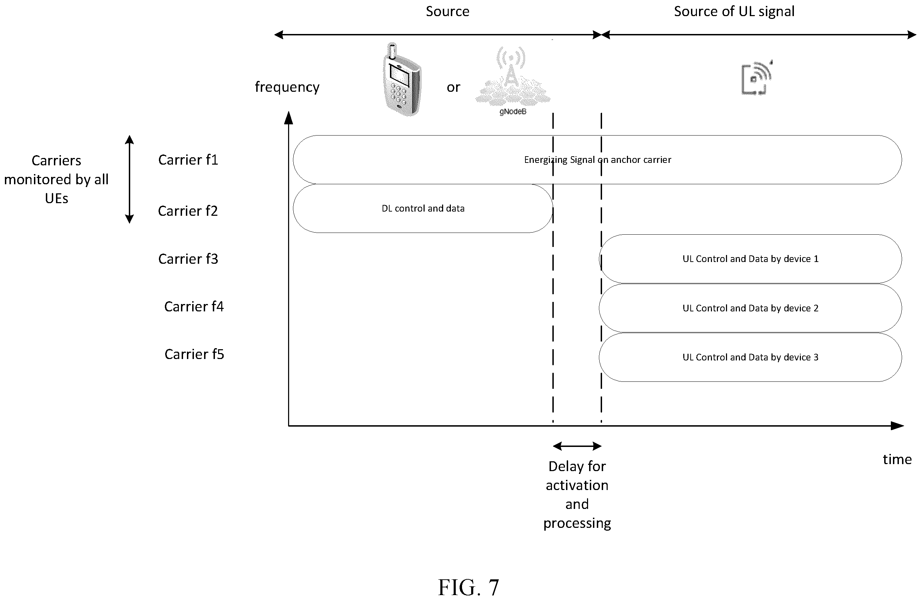

To address these type of issues, according to an embodiment, a non-adjacent frame structure design is provided. In particular, an energizing signal along with an associated DL control signaling can be allocated in a small subset of available carriers so that they can be easily monitored and detected by ambient IoT devices. Subsequently, the ambient IoT devices can be scheduled by the control signaling to perform UL transmission (e.g., through back scattering of the energizing signal) on either an indicated carrier that is scheduled in the DL control signal or on a randomly selected carrier. In other words, the DL control signaling may be confined within a small bandwidth that is known to an ambient IoT device, such that the bandwidth that needs to be monitored is limited, e.g., as illustrated in FIG. 7.

FIG. 7 illustrates an example in which an energizing signal and DL control signaling are confined in a small bandwidth to reduce a monitored bandwidth by ambient IoT devices, according to an embodiment.

Referring to FIG. 7, in this example, the energizing signal, i.e., a CW, and DL control signaling are confined in a small bandwidth including Carrier f1 and f2.

A carrier frequency over which DL control signaling may be sent can be (pre)-defined or (pre)-configured and can be dependent on a source (e.g., a source type or a source identifier (ID)). For example, a gNB can be (pre)-configured to use a carrier frequency that is different from that of an intermediate node. In addition, two neighboring intermediate nodes may be (pre)-configured or scheduled by the gNB with different resources for DL control signaling and an energizing signal to avoid collisions when they are activated to handle ambient IoT traffic. In such a case, multiple potential resources can be (pre)-configured and the intermediate node can be scheduled by the gNB (e.g., through radio resource control (RRC) or DL control information (DCI) signaling) to operate on a specific resource within the bandwidth for its DL control signaling.

Alternatively, the intermediate nodes can autonomously select the resource over which to send the DL (e.g., based on its ID or type).

As yet another alternative, a resource can depend on the geographical location where the intermediate node is located. In particular, a set of resources can be assigned within a given location. Subsequently, an intermediate node operating in this location can be assigned one of the resource set or it can randomly select one of the resources from this set.

From the source perspective, the intermediate nodes can also perform sensing to identify the available resources from a (pre)-configured set that are not occupied by any of its neighbors. This can be done by performing energy detection and identifying that the measured energy level is below a pre-configured threshold. The threshold can be priority dependent and can be iteratively increased until a resource is found that would result in the lowest interference level to its neighbors.

In another approach, the intermediate nodes may perform reference signal received power (RSRP) measurements on the control signaling received from its neighboring nodes and accordingly decide on the occupancy of the resources available for transmitting the energizing/control signaling. In particular, an intermediate node can identify the potential resources from the (pre)-configured set with a measured RSRP below a (pre)-configured threshold. Subsequently, the intermediate node can randomly select one of the resources that are identified as unoccupied.

In scenarios in which all of the resources are identified as occupied, the RSRP/energy threshold can be iteratively increased to identify a resource that would result in the least interference to the neighboring intermediate nodes. This resource may then be used for sending energizing and control signals.

If an RSRP threshold is iteratively increased, the intermediate node can be penalized (e.g., by using a lower transmit power) when using the selected resource for transmitting the energizing signal and the control signal to reduce the amount of interference incurred by the neighboring intermediate nodes.

From an ambient IoT perspective, devices may attempt to monitor different potential carriers on different monitoring occasions until a source is detected. These monitoring occasions can be separated in time (e.g., every hour) and last for short durations in order to reduce monitoring overhead.

Alternatively, ambient IoT devices can first attempt to perform wideband monitoring of all potential control carriers simultaneously until a DL control signal is detected. Subsequently, a narrowband carrier over which the DL control signaling may be detected and then used to receive future DL control signaling in subsequent occasions to save power. If multiple energizing and control signals are available, the device can select the one with the highest signal strength based on the measurements of the energizing signals.

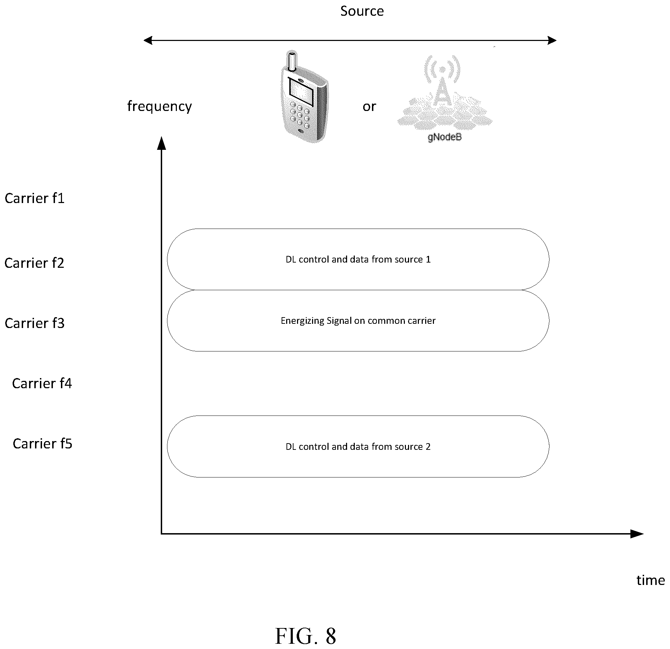

In some cases, DCI can be separated from a carrier frequency of an energizing signal as shown in FIG. 8.

FIG. 8 illustrates an energizing signal sent on a common carrier and control signaling from different sources being sent on separate carriers, according to an embodiment.

Referring to FIG. 8, the energizing signal can be sent on a common carrier that is independent of the source, whereas different sources can use different carrier frequencies for their DL control signaling. In the example of FIG. 8, the energizing signal is sent on the common Carrier f3. An objective here is that the ambient IoT devices can still rely on (pre)-configuration to be able to receive the energizing signal and activate. Subsequently, the ambient IoT devices can then adjust their RF circuity to detect the DL control signaling from the source (e.g., after identifying the carrier frequency of its control signaling). This may help in reducing collisions between neighboring sources (i.e., the intermediate nodes) since each source will be using a different resource for its control signaling, e.g., Carrier f2 and Carrier f5.

In some cases, the energizing signal can also be modulated to indicate the carrier frequency of the control signaling.

A carrier frequency of an energizing signal can also be different from that of the DL control signaling to reduce a burden on the ambient IoT device when performing back scattering. For example, the DL control signal can be sent in the DL spectrum along with the energizing signal (or in a common carrier as illustrated in FIG. 8) for activating the device. Subsequently, the energizing signal is then moved to the UL spectrum to allow the ambient IoT device to perform back scattering without the need for a UL/DL conversion.

In accordance with the above-described embodiments, to reduce power consumption of ambient IoT devices, the ambient IoT devices may be configured to monitor only a small portion of an available bandwidth to obtain DL control signaling. The carrier frequency of the DL control signaling can be pre-defined or (pre)-configured and can be dependent on the source type (e.g., a gNB or an intermediate node).

Additionally, an intermediate node can select the resource to send its energizing/control signaling based on energy detection or RSRP measurements. If an intermediate node iteratively increases an energy/RSRP threshold to identify a resource for sending its energizing/control signaling, its transmit power can be penalized to reduce the interference incurred by the neighboring intermediate nodes.

Further, ambient IoT devices can be (pre)-configured to sequentially sweep all the potential DL control signaling carrier frequencies or to perform wideband monitoring followed by narrowband monitoring after a DL control signal is detected.

A carrier over which an intermediate node sends its DL control signaling can be (pre)-configured by a gNB through RRC signaling or indicated in the DCI used to schedule the sidelink transmission of the control signaling.

An energizing signal can be sent on a common carrier, irrespective of a source type and ID, to ensure proper activation of ambient IoT devices, whereas a carrier over which control signaling is sent can be dependent on a source type and an ID to reduce collisions.

### B. Controlling transmit power of ambient IoT devices

1. An aspect of the disclosure is to control transmit power of ambient IoT devices, e.g., because:
   the proximity of a large number of devices attempting to communicate simultaneously (or within a short time window) can result in large interference;
   power imbalance may occur between transmissions of devices at a source due to differences in device locations (e.g., an ambient IoT device close to the source can have much higher received power when compared to the one far away from the source); and
   power imbalance may occur between the transmissions of devices at a source due to their types (e.g., a Type-1 can have much lower received power at the source since it lacks power amplification when compared to a Type-2a or Type-2b device).

Hence, transmission power of neighboring ambient IoT devices may be controlled to avoid large leakage and improve overall system performance.

According to an embodiment, energizing signals used to activate ambient IoT devices mya be used to control transmission power of neighboring ambient IoT devices. In particular, a duration of an energizing signal can be used to control back scattering power amplification for Type-2a UEs. For example, maintaining the energizing signal for a longer duration will allow the ambient IoT device Type-2a to harvest more energy, thus allowing it to increase the transmit power.

A duration of an energizing signal can also be used to implicitly indicate a selected transmit power by Type-2b devices that perform UL transmissions based on an internal energy source. In particular, receiving an energizing signal for a duration above a (pre)-configured threshold can indicate to Type-2b devices to use a higher power level for UL transmissions than when the duration of the energizing signal is below the (pre)-configured threshold. The threshold may be pre-defined or (pre)-configured and may be dependent on device priority. For example, higher priority transmissions can have a much shorter duration thresholds than lower priority transmissions.

Alternatively, transmit power of ambient IoT devices relying on back scattering may be controlled by adjusting a transmit power of an energizing signal. More specifically, reducing an energizing signal strength may directly impact a strength of a reflected signal for a Type-1 device or increase an energy harvesting duration for a Type-2a device.

These types of approaches may be more applicable when each device or a subset of devices is triggered by a different energizing signal. In this case, a source can have full control on the transmit power of each of the ambient IoT device types and can accordingly adjust the transmit power based on the measurements performed at the source.

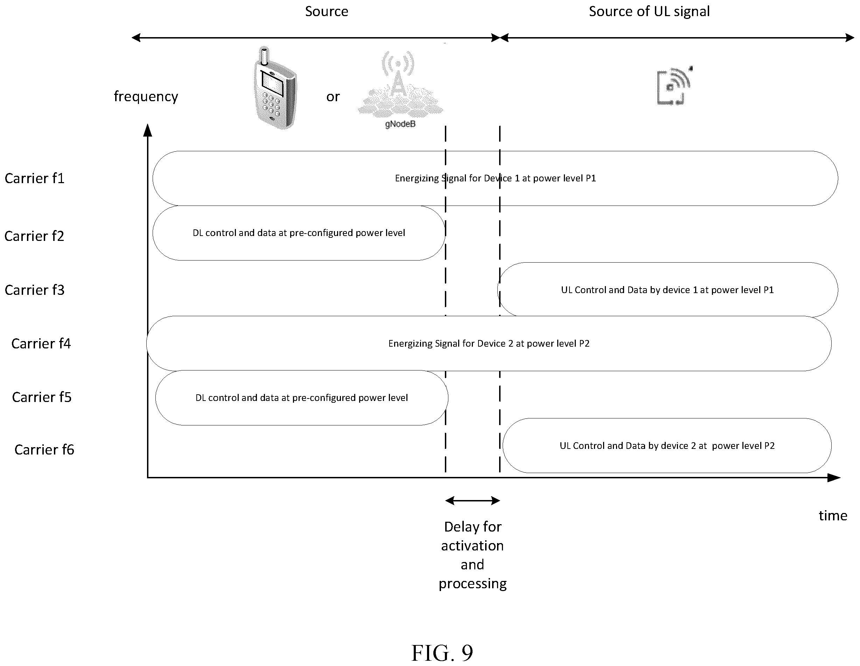

In addition, a source can randomize transmission times of Type-2a devices by changing a strength of an energizing signal since they will require different durations to charge their on-board energy source. This adjustment of the strength of the energizing signal can also be based on the ambient IoT device locations, if known, the measured signal strength of the back scattered signal, the device density, the beam direction (index) of the transmitted DL energizing signal in case of beam forming, or the reliability of previous transmissions. For example, devices that are positioned farther away from a source can be triggered with a stronger energizing signal than devices that are positioned closer to the source, e.g., as illustrated in FIG. 9.

FIG. 9 illustrates a method of energizing signals with different power levels to control UL control signal power, according to an embodiment.

Referring to FIG. 9, devices assigned to or randomly selecting an energizing signal on f1 can have a higher power level than devices assigned to or randomly selecting an energizing signal on f4. Subsequently, the back scattered signal power of these devices will be different. The power of the DL control and data can be set to a (pre)-configured or (pre)-defined level to ensure the reliability of the DL control signaling.

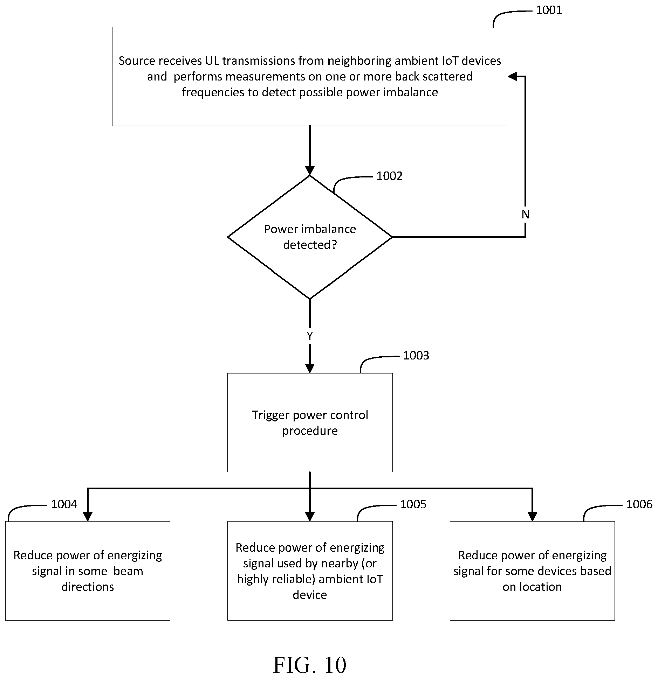

FIG. 10 is a flow chart illustrating a method performed by a source for controlling power of a back scattered signal to reduce interference, according to an embodiment.

Referring to FIG. 10, in step 1001, a source receives UL transmissions from neighboring ambient IoT devices and performs measurements (e.g., reliability, signal strength) on one or more back scattered frequencies to detect possible power imbalance.

In step 1002, the source determines if a power imbalance is detected.

If a power imbalance is not detected, the method returns to step 1001. However, if a power imbalance is detected, a power control procedure is triggered in step 1003. The power control procedure may include reducing a power of an energizing signal in some of the beam directions in step 1004, reducing a power of an energizing signal used by nearby (or highly reliable) ambient IoT device in step 1005, and/or reducing a power of an energizing signal for some devices based on their location in step 1006.

According to an embodiment, a source can also control transmit power of ambient IoT devices through control signaling. In particular, the source can send a power limit offset indication in DL control signaling to increase or decrease the transmit power of the ambient IoT devices. The offset may be an index from a pre-defined or a (pre)-configured set of offsets per resource pool. The offset may also be applicable to a specific ambient IoT device by including an ambient IoT device ID or may be directed towards a set of ambient IoT devices based on their type, priority, or groupcast ID. For example, a negative power offset can be applied to all low priority ambient IoT devices to reduce interference incurred by higher priority neighboring ambient IoT device.

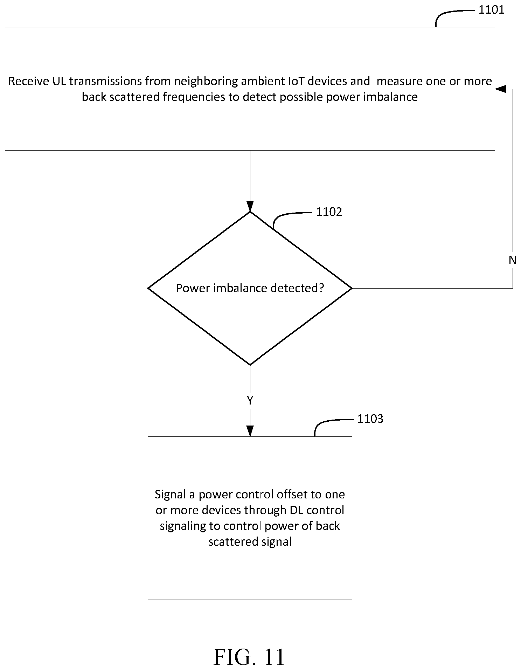

FIG. 11 is a flow chart illustrating a method performed by a source for controlling power of a back scattered signal through DL control signaling, according to an embodiment.

Referring to FIG. 11, in step 1101, a source receives UL transmissions from neighboring ambient IoT devices and performs measurements (e.g., reliability, signal strength) on one or more back scattered frequencies to detect a possible power imbalance.

In step 1102, the source determines if a power imbalance is detected.

If a power imbalance is not detected, the method returns to step 1101. However, if a power imbalance is detected, the source signals a power control offset to one or more devices through DL control signaling to control power of back scattered signals in step 1103.

Alternatively, the offset can also be in the form of enabling/disabling a field of UL power amplification. For example, if a one-bit field is set to 0, this may indicate that power amplification is disabled for low priority transmissions in order to reduce interference incurred by higher priority transmissions.

In accordance with above-described embodiments, UL power control can be enforced by a source by adjusting a duration of an energizing signal to reduce a time available for energy harvesting by Type-2a devices. UL power control can also be enforced by a source by adjusting a duration of an energizing signal to implicitly indicate a transmit power to use by an ambient IoT device Type-2b (e.g., duration larger than a threshold indicates a higher transmit power).

UL power control can be enforced by a source by adjusting an energy level of an energizing signal such that different Type-1 devices can have different transmit powers for their UL transmissions that rely on back scattering.

UL power control can be enforced by a source by sending a power offset in DL control signaling to a neighboring ambient IoT device.

A power offset sent in a DL can be applicable to a specific device based on its ID or can be targeted towards a subset of devices based on their groupcast ID, type, or priority level.

2. According to an embodiment, an ambient IoT device can be (pre)-configured to contiguously perform repeated transmissions of a payload over a backscattered signal as long as an energizing signal exists. In this case, a continuation of the energizing signal can act as an implicit negative acknowledgement (NACK) to request a retransmission of the payload with a different power level. Type-2a devices can start with limited amplification of a back scattered signal and then iteratively increase amplification power based on the presence of the energizing signal. For example, if a payload transmission by the ambient IoT device consumes 10 ms, then the presence of the energizing signal for 20 ms will indicate a NACK in the first transmission and accordingly, the ambient IoT device may be required to boost the power amplification. The amount (e.g., increment) of boost may be pre-defined or (pre)-configured and may be dependent on device type, a number of implicit NACKs received, or device priority.

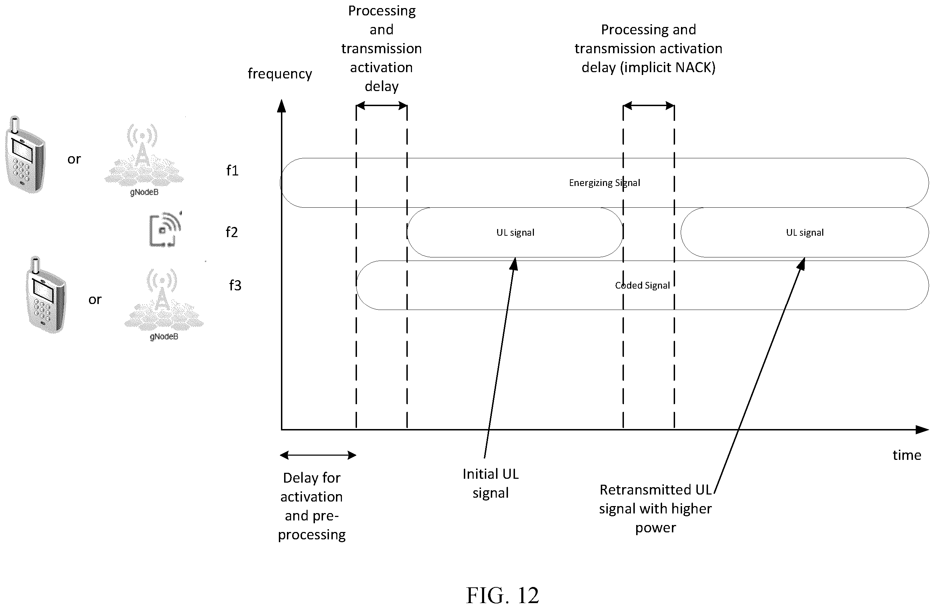

Alternatively, a power boost can be directly indicated in a coded DL control signal. An example of this power boost is illustrated in FIG. 12.

FIG. 12 illustrates an example of triggering retransmissions with different power levels, according to an embodiment.

Referring to FIG. 12, a power boost for retransmitting the UL signal in Carrier f2 is directly indicated in a coded DL control signal in Carrier f3. A gap between UL transmissions may be utilized for energy harvesting, such that an ambient IoT device can increase its UL transmission power.

Alternatively, for Type-1 devices, a source can change a strength of an energizing signal with time. More specifically, the source can start with a low power level and attempt to decode back scattered signals from ambient IoT devices. If the back scattered signal is not detected correctly, the source can increase the power of the energizing signal for subsequent repetitions such that they can be correctly decoded at the source. The initial transmit power used and the step-up between each repetition can be (pre)-configured or pre-defined. The (pre)-configuration can be dependent on a source type (e.g., a gNB can be (pre)-configured with a different initial power when compared to an intermediate node).

In addition, the (pre)-configuration can also be dependent on the device priority. For example, a higher priority transmission from an ambient IoT device can start with a larger initial energizing signal transmit power than a lower priority transmission.

In addition, a source can also explicitly indicate, in its DL control signaling, a max transmit power or amplification level to be used by an ambient IoT device for its retransmissions.

The presence of an energizing signal can also be used to early terminate a transmission by an ambient IoT device. More specifically, if a UL message is correctly decoded at a source, then the source can elect to stop transmitting an energizing signal for a given duration or to change a carrier over which the energizing signal is transmitted to indicate an implicit acknowledgement (ACK) to the ambient IoT device and accordingly stop further retransmissions.

Alternatively, a source can use the control signaling to provide an explicit ACK to an ambient IoT device (e.g., by using a specific field with the ID of an ambient IoT device whose messages were correctly received or by using a different ID to trigger a different ambient IoT device) and accordingly stop further retransmissions. The latter approach may improve resource utilization by opportunistically triggering a transmission from a different ambient IoT device on resources that were originally intended for a repetition of a UL transmission.

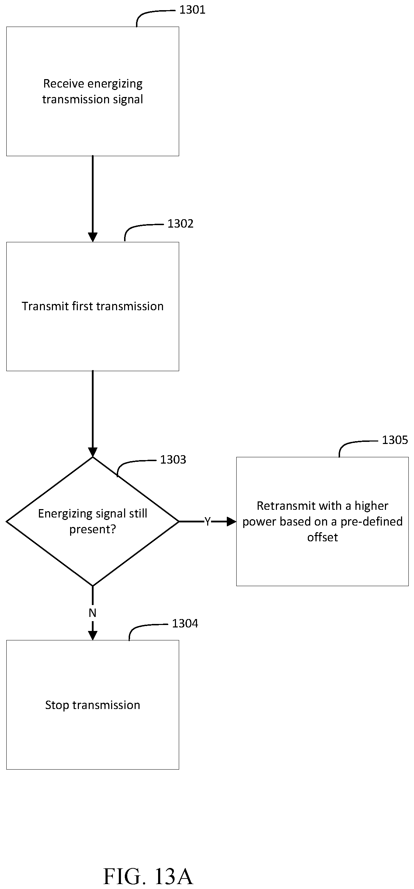

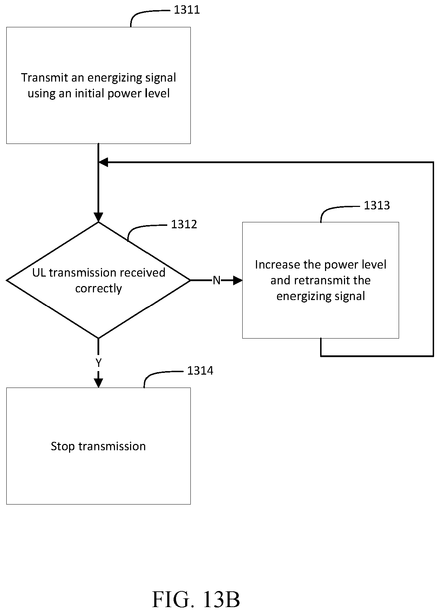

The operation of the intermediate node and the Ambient IoT devices are captured in the flowcharts in Figure 13 when an implicit ACK is used to stop further retransmissions by the Ambient IoT devices.

FIG. 13A is a flow chart illustrating a method performed by an ambient IoT device for controlling transmit power of retransmissions, according to an embodiment. More specifically, FIG. 13A illustrates a method performed by an ambient IoT device, wherein an implicit ACK is signaled by stopping transmission of an energizing signal.

Referring to FIG. 13A, in step 1301, the ambient IoT device receives an energizing transmission signal.

In step 1302, the ambient IoT device transmits a first transmission in response to receiving the energizing transmission signal.

In step 1303, the ambient IoT device determines if the energizing transmission signal is still present.

If the energizing transmission signal is still present, the ambient IoT device retransmits the first transmission with a higher power based on a pre-defined offset in step 1305 However, if the energizing transmission signal is no longer present, the ambient IoT device stops transmissions.

FIG. 13B is a flow chart illustrating a method performed by an intermediate node for controlling transmit power of retransmissions, according to an embodiment. More specifically, FIG. 13B illustrates a method performed by an intermediate node, wherein an implicit ACK is signaled by stopping transmission of an energizing signal.

Referring FIG. 13B, in step 1311, the intermediate node transmits an energizing signal using an initial power level.

In step 1312, the intermediate node determines if a UL transmission is received correctly from an ambient IoT device, in response to the transmitted energizing signal.

If a UL transmission is not received correctly from the ambient IoT device, the intermediate node increases the power level of the energizing signal and transmits the increased energy energizing signal in step 1313. However, if a UL transmission is received correctly from the ambient IoT device, the intermediate node stops transmission of the energizing signal. As described above, the ambient IoT device interprets the stopping of the transmission of the energizing signal as an implicit ACK for the UL transmission.

According to another embodiment of the disclosure, a method is provided for power control in a multicast fashion, especially for cases with relatively large numbers of ambient IoT devices, e.g., more than 10 devices for the case of a picocell. More specifically, for Type-1 devices, it is expected that a large number of devices will exist at a given location and accordingly can create large interference, especially for devices that are farther away from the source. To address these types of issues, a source (e.g., a gNB or an intermediate node) can control power based on a farthest device within a targeted group (when locations of the ambient IoT devices are known), based on received signal strength of a device with the worst channel conditions (e.g., based on channel measurements on the UL), or based on beam direction (in case of beam forming). In addition, a source may also need to address a large number of devices in multicast fashion when performing power control, which may be performed using a pre-defined or (pre)-configured groupcast ID, using a pre-defined or (pre)-configured broadcast ID, using a different resource of a DL energizing signal, using power control of a DL control signal, or using different beam directions.

Using a pre-defined or (pre)-configured groupcast ID: In this case, when a source uses the groupcast ID in a DL control channel, all of the devices that are configured with this ID will apply the DL power control (e.g., reduce a duty cycle of reflection in case of Type 1 devices or reduce power amplification in case of Type-2 devices). This ID can also be configured through RRC signaling or other control signaling (e.g., higher layer signaling or a MAC control element (CE)). The groupcast ID can also obtained by applying a hash function on the device ID (e.g., by using only the first least significant bits of a device ID).

Using a pre-defined or (pre)-configured broadcast ID: In this case, a source can send broadcast information to all devices to request a reduction/increase in UL power for all neighboring ambient IoT devices.

Using a different resource of a DL energizing signal: For example, different device groups may be assigned multiple carrier frequencies (or time slots) to monitor their DL energizing signal. In this case, sending an energizing signal in different DL slots/frequencies can be used to implicitly indicate UL transmission power for the group (i.e., implicit indication instead of using the group ID). A resource offset can also be pre-configured based on a DL resource that is linked to a pre-defined power control offset. For example, using slot N+1, rather than slot N, to provide DCI can indicate a 10% power reduction in an upcoming UL transmission, whereas using slot N+2 can indicate 20% power reduction.

Using power control of a DL control signal: In some cases, a source may want to reduce transmit power of only neighboring ambient IoT devices, e.g., because these devices experience the best channel conditions and thus their interference impact on devices that are farther away is maximized. To achieve this, the source can send a DL control signal to indicate power control information (e.g., by using a groupcast or a broadcast ID). To ensure that only nearby devices receive the DCI and apply the power control, the DL control can be sent with lower power based on UL channel measurements (e.g., measurements in previous slots). In this case, only the neighboring ambient IoT devices will apply the power control information, thereby reducing their impact.

Alternatively, the DL control signal can also include the source location and expected range and accordingly devices can identify whether this power control is applicable or not base on their locations.

Using different beam directions: In this case, a source can control interference in different directions by sending DL power control information in different beams. For example, beam direction 1 can be targeted with a DL power control reduction of 20%, whereas beam direction 2 can be targeted with a DL control reduction of 50%. The selection of the DL control indication can be based on measurements (e.g., UL measurements performed in previous rounds) or the locations of the ambient IoT devices (e.g., if their locations are known and relatively static).

A duration for which a DL power control is applied may start from the reception of a DL power control command and last for either a pre-defined or a (pre)-configured duration (configuration can be done through DL control signaling such as RRC, MAC CE, or higher layer control signaling). The duration can also be dependent on the device type, priority, and/or mobility. For example, Type-1 devices can have a longer duration than Type-2b devices, or devices with lower mobility can have a longer duration than higher mobility devices.

In accordance with the above-described embodiments, a source can control the number of retransmissions performed by ambient IoT devices through an energizing signal (e.g., each of these retransmission can be performed with a different power level). The difference in power level between subsequent transmissions/re-transmissions can be pre-defined, (pre)-configured (e.g., dependent on device type and priority), or directly indicated by DL control signaling.

For a Type-1 device without power amplification, the source can adjust the energizing signal strength between subsequent transmissions/retransmissions to control the transmit power.

The source can use an energizing signal to provide an implicit ACK and terminate the remaining retransmissions by the ambient IoT devices.

The source can control the power of neighboring ambient IoT devices by using DCI that is sent in a broadcast fashion or in a groupcast fashion to a subset of the ambient IoT devices (e.g., a specific group).

An ambient IoT devices can be (pre)-configured with a group ID that is used for groupcast/broadcast power control.

A source can send power control information to a subset of ambient IoT devices by applying a hash function to an ambient IoT device ID (e.g., by sending the 4 lowest significant bits of the device ID).

A source can send DL power control information to a specific group of ambient IoT devices by using a different time/frequency resources based on (pre)-configuration.

A source can control UL transmit power of neighboring ambient IoT devices by reducing transmission power of an energizing signal or a DL control signal (e.g., to ensure that the DL control signal is received only by the neighboring ambient IoT devices).

A duration for which DL power control information are applicable can be pre-defined or (pre)-configured (e.g., through RRC signaling).

### C. Considerations for power leakage between adjacent carriers

1. Due to a high power imbalance between ambient IoT devices (e.g., higher power received from a nearby Type-2b device while a lower power is received from a Type-1 device farther from the source), the reliability of the weaker received signal can be significantly affected. For example, a limited dynamic range of a power amplifier at a receiver side can significantly impact accuracy of the detection of lower power signals when an adjacent carrier has a high power level. In addition, the low complexity of the devices can result in using simplified RF masks that can result in high power leakage between adjacent carriers. To address these drawbacks, according to an embodiment, scheduling/triggering of different ambient IoT device types on adjacent carriers may be avoided. In other words, different resource pools can be used by different device types, whereby a resource pool can be defined as a set of time/frequency resources through (pre)-configuration (e.g., a bitmaps can be used to indicate the slots/carriers belonging to the resource pool). For example, a bitmap of 10101010 can be used to indicate that every other slot belongs to a resource pool. Similarly, another bitmap can be used to indicate carriers belonging to the resource pool. The bitmaps can be periodic, such that ambient IoT devices are able to identify slots/carriers belonging to a resource pool.

High priority devices may be allowed to use resource pools of other device types. For example, a resource pool can be (pre)-configured for Type-1 devices with no power amplification that is accessible only by high priority Type-2b devices. Subsequently, the power imbalance between adjacent carriers can be significantly reduced (except for the interference incurred by/due to these high priority devices). In this example, the high priority Type-2b devices using the Type-1 device resource pool can also be restricted to use lower transmit power by applying a (pre)-configured power reduction offset that is dependent on device type and priority. Similarly, Type-1 devices can experience a boost in their transmit power (e.g., by increasing the power of the energizing signal) when they are transmitting in a resource pool configured for a Type-2b device such that their performance can be improved.

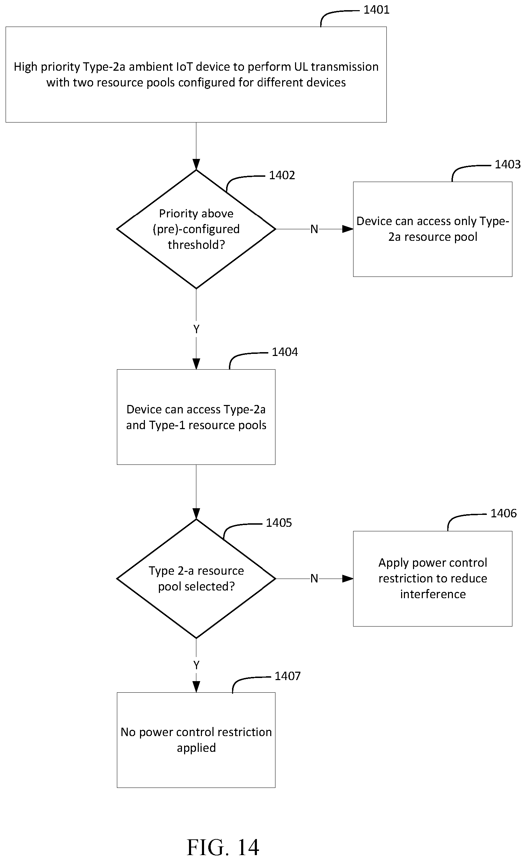

FIG. 14 is a flow chart illustrating a method performed by an ambient IoT device for selecting a resource pool for transmission, according to an embodiment.

Referring to FIG. 14, in step 1401, a high priority Type-2a ambient IoT device wants to perform a UL transmission with two resource pool configured for different devices (e.g., one for Type-2a devices and another for Type-1 devices).

In step 1402, the ambient IoT device determines if its priority is above a (pre)-configured threshold.

If the ambient IoT device does not have a priority above the (pre)-configured threshold, the ambient IoT device can only access the resource pool configured for Type-2a devices in step 1403. However, if the ambient IoT device has a priority that is above the (pre)-configured threshold, the ambient IoT device can access both the resource pool configured for Type-2a devices and the resource pool configured for Type-1 devices in step 1404.

In step 1405, the ambient IoT device determines if the resource pool configured for Type-2a devices is selected.

If the resource pool configured for Type-2a devices is not selected, the ambient IoT device applies a power control restriction to reduce interference in step 1406. However, if the resource pool configured for Type-2a devices is selected, no power control restriction is applied in step 1407.

According to another embodiment of the disclosure, a source can be restricted to schedule, on adjacent carriers, only ambient IoT devices with relatively comparable power levels (e.g., with difference in power levels that is below a (pre)-configured threshold) based on previous measurements (e.g., measurements based on previous UL transmissions).

In another alternative, gaps (e.g., multi-carrier separation in frequency domain wherein the gap size can be (pre)-configured per resource pool) can be introduced between adjacent carriers when a significant power imbalance is detected. In this case, a source can trigger retransmissions on different carriers to allow for sufficient gap between adjacent transmissions.

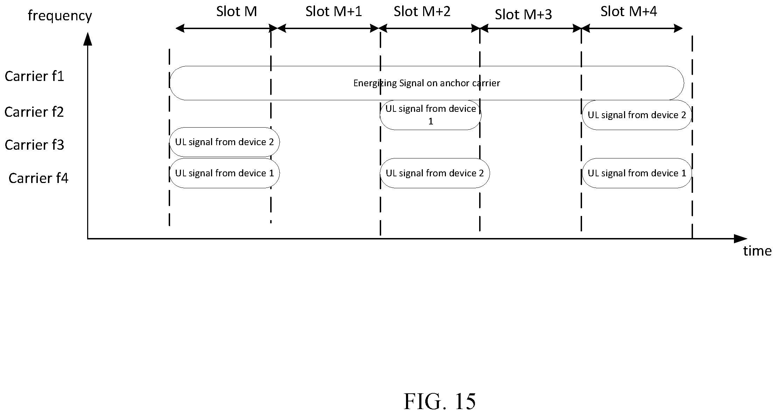

To reduce the impact of the high power imbalance, ambient IoT devices can be assigned a sequence of resources over which to perform frequency hopping when performing UL retransmissions. In this case, it is highly unlikely that a device will experience a high power imbalance on all of its UL transmissions/retransmissions, e.g., as illustrated in FIG. 15.

FIG. 15 illustrates an example of applying carrier hopping to reduce power imbalance between neighboring ambient IoT devices, according to an embodiment.

Referring to FIG. 15, although both UE device 1 and UE device 2 transmit signals in slots M, M+2, and M+4, UE device 1 transmits in Carriers f4, f2, and f4, respectively, according to a hopping pattern selected by UE device 1, while UE device 2 transmits in Carriers f3, f4, and f2, respectively, according to a hopping pattern selected by UE device 2.

According to another embodiment, to control power imbalance, ambient IoT device locations can be considered. More specifically, a source can consider locations of the ambient IoT devices when performing scheduling of such devices on adjacent carriers. For example, if two ambient IoT devices (e.g., a Type-2b device and a Type-1 device) are being scheduled, wherein the Type-2b device is closer to the source and the Type-1 device is farther away from the source, then they are not expected to be scheduled on adjacent resources to avoid the power leakage.

The locations of the ambient IoT devices can be identified through signaling or based on measurements. More specifically, for fixed or slow moving ambient IoT devices, these ambient IoT devices can be aware of their locations and accordingly signal absolute or relative locations to a source in UL transmissions.

Alternatively, a source can estimate locations of ambient IoT devices based on received signal strength and a receiving beam (in cases wherein beamforming is employed). Subsequently, the source can then block some resources from being used to avoid a power imbalance on adjacent carriers between the devices.

A source can also trigger a resource reselection if an ambient IoT device has declared a future resource (e.g., based on random resource selection) that would result in a high power imbalance. For example, if a nearby Type-2b device declares a future reservation at slot X and carrier Y while a Type-1 device, which is farther away from the source, declares a future reservation at slot X and carrier Y+1, a high power imbalance would occur. In this case, the source can transmit an energizing signal or a DL control signaling to trigger a resource reselection by one of the devices to avoid the interference.

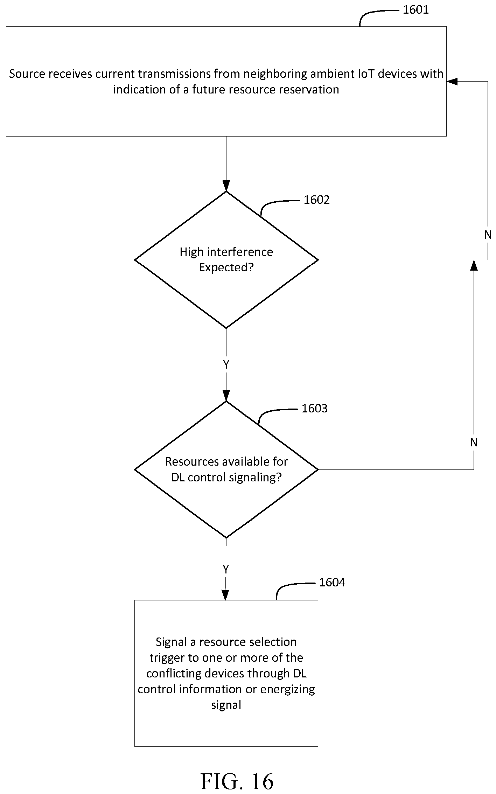

FIG. 16 is a flow chart illustrating a method of resource reselection triggering to avoid high interference between overlapping or adjacent ambient IoT device transmissions with high power imbalance, according to an embodiment.

Referring to FIG. 16, in step 1601, a source receives current transmissions from neighboring ambient IoT devices with an indication of a future resource reservation.

In step 1602, the source determines if high interference is expected between the neighboring ambient IoT devices based on the future resource reservation.

If the source determines that high interference is not expected between the neighboring ambient IoT devices, the method returns to step 1601. However, if the source determines that high interference is expected between the neighboring ambient IoT devices, the source determines if resources are available for DL control signaling in step 1603.

If the source determines that resources are not available for DL control signaling, the method returns to step 1601. However, if the source determines that resources are available for DL control signaling, the source transmits a resource selection trigger to one or more of the neighboring ambient IoT devices through DL control information or energizing signal in step 1604.

Resource reselection triggering can also be based on priority, wherein a device that is triggered to perform a reselection has the lowest priority. In such a case, the devices might be required to receive DL control signaling between their declaration of a future reservation and a future reserved resource (i.e., time slot) over which they will perform their transmission to receive a resource reselection trigger. The sensing can also be limited to devices that will perform high power amplification (e.g., Type-2b devices or Type-2a devices with a high amplification level).

The sensing can also be based on an energizing signal. For example, sending the energizing signal on specific time/frequency resource can indicate a resource reselection trigger. The time/frequency resource can be (pre)-configured for specific ambient IoT devices based on their ID, device types, or device priority.

To reduce the impact of a power imbalance between ambient IoT devices, a source can also control a transmit power of an energizing signal that will be used for back scattering as described above.

The impact of the power imbalance can also go beyond adjacent carriers due to a limited dynamic range of a power amplifier at a source (e.g., when a source is a UE). Subsequently, an interfering devices can be prevented from using their indicated future slot for their intended UL when a high power imbalance is expected.

In accordance with the above-described embodiments, different device types can be assigned separated resource pools to avoid interference due to power leakage from adjacent carriers.

High priority devices may be allowed to use resource pools assigned to other device types, but with a reduced transmit power.

Ambient IoT devices can be assigned carrier hopping sequences to use for their retransmissions to reduce the chances of having a power imbalance on all retransmissions.

The locations of ambient IoT devices can be taken into consideration when scheduling resources for UL transmissions such that a high power imbalance does not occur on adjacent carriers.

The locations of ambient IoT devices can be sent to a source through UL control signaling or can be estimated by the source through energy/beam measurements.

A source can trigger resource reselection through DL control signaling to avoid a large power imbalance between ambient IoT devices based on their future reservations. This triggering can be based on a priority of an ambient IoT device.

Certain ambient IoT device types or devices performing UL power amplification can may be configured to detect a DL control signal between their future reserved resources and a slot in which they declared the reservation in order to detect a resource reselection trigger.

### D. Open loop power control based on measured DL pathloss:

1. As described above, reliability of signals transmitted by low energy devices can be significantly degraded when there is another transmission with a large power imbalance. For example, this can happen due to a mixture of devices relying on back scattering with no or limited power amplification (i.e., device Type-1) and other devices with higher capability (i.e., device Type-2b) with an onboard energy source, and thus capable of higher power amplification.

According to an embodiment, a method if provided to reduce power imbalance based on measurements performed by ambient IoT themselves, without relying on scheduling/control from a source (i.e., a gNB or an intermediate node). More specifically, ambient IoT devices can perform channel measurements on received DL signals, such as an energizing signal, a DL control signal, or another signal dedicated for measurements. The measurements can be as simple as energy detection to identify path loss.

Alternatively, the channel measurements can be based on RSRP measurements on reference signals embedded within DL control signaling. Subsequently, an ambient IoT device can estimate pathloss to a source in a DL direction.

To accurately estimate pathloss, an ambient IoT device should know a transmit power from a source, which may be done using a (pre)-configuration of an energizing signal or a DL data/control signal transmit power level, using a (pre)-configuration of reference signal power, or using an indication by a source.

(Pre)-configuration of energizing signal or DL data/control signal transmit power level: In this approach, a source uses a (pre)-configured transmit power for an energizing signal or DL control/data signaling. The (pre)-configuration can be readily available at ambient IoT devices and accordingly used for energy measurements to estimate pathloss between the source and the ambient IoT devices.

(Pre)-configuration of reference signal power: In this approach, ambient IoT devices perform measurements based on time/frequency locations of reference signals. The locations of these reference signals can be specified, (pre)-configured, or indicated to the ambient IoT devices in DL control signaling. Subsequently, the ambient IoT devices can perform measurements (e.g., energy measurements or RSRP measurements) and accordingly estimate pathloss between a source and the ambient IoT devices.

Indication by a source: In this approach, a source can indicate in DL control signaling a transmit power used for a DL control signal or an energizing signal. Subsequently, an ambient IoT device can perform a power measurement or an RSRP measurement on a received signal and accordingly estimate pathloss between the source and the ambient IoT device.

To simplify the pathloss calculations at the ambient IoT devices, a reported pathloss value can be selected from a set of (pre)-configured pathloss values based on thresholds. More specifically, an ambient IoT device can perform energy/power measurements and accordingly compare a measured value against one or more pre-configured threshold(s). Subsequently, if the measured value is below threshold 1 then the first (pre)-configured pathloss can be selected and so on.

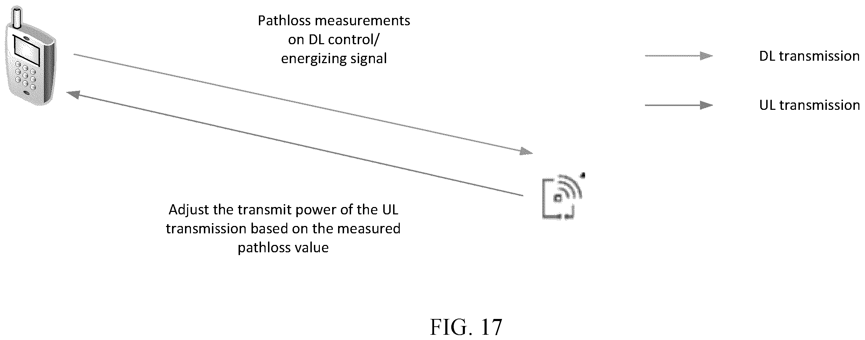

After an estimate of the pathloss is obtained, the ambient IoT device can assume channel reciprocity and accordingly estimate UL pathloss to the source. Subsequently, the ambient IoT device can identify a target received power at the source, e.g., as illustrated in FIG. 17.

FIG. 17 illustrates an example of DL pathloss measurements being used for UL power control by an ambient IoT device, according to an embodiment.

Referring to FIG. 17, the ambient IoT device receives a DL control/energy signal and performs pathloss measurements. Based on the measured pathloss value, the ambient IoT device adjusts a transmit power of a UL transmission.

A target receive power for a UL signal at a source can be obtained through a (pre)-configuration or dynamically signaled from a source.

When the target receive power for the UL signal at the source is obtained through a (pre)-configuration, an ambient IoT device can be (pre)-configured with a target receive power based on its priority or device type. For example, the higher the priority of the transmission, the higher the target receive power. Alternatively, when based on the device type, a Type-2b ambient IoT device can have a higher target power than a Type-1 ambient IoT device.

When the target receive power for the UL signal at the source is dynamically signaled from the source, the source can signal the UL targeted receive power in its DL control signaling. The target receive power can also be dependent on the device type or transmission priority. For example, higher priority transmissions can be assigned a higher target receive power to improve their reliability. To reduce the signaling overhead, the target receive power can also be signaled as an offset from a (pre)-configured reference per resource pool. The target receive power can also be dedicated to a specific ambient IoT device by including its ID in DL control signaling or can be dedicated to a subset/all of the ambient IoT devices based on their groupcast/broadcast IDs.

The dependency on pathloss for power control should mostly be used for coarse power control because DL pathloss measurements are expected to vary with time (especially for high mobility devices) and to change based on an interference environment (e.g., the presence of a neighboring intermediate node using the same DL control signal). Hence, an offset can be applied on the received pathloss measurement to avoid over restriction on device transmission/back scattering power.

The duration for which a power control restriction is applied can be based on a (pre)-configuration and can be dependent on device type, mobility, and/or priority.

In accordance with the above-described embodiments, ambient IoT devices can perform pathloss measurements (e.g., energy based or RSRP based) on DL control/energizing signals and rely on channel reciprocity to identify UL pathloss to a source.

A transmit power of a source can be identified by ambient IoT devices through DL control signaling or by (pre)-configuration.

To simplify pathloss measurements at ambient IoT devices, a discrete level approach can be considered, wherein the ambient IoT devices select one level from a set of (pre)-configured pathloss levels.

A target receive power at a source can be identified by ambient IoT devices through DL control signaling or by (pre)-configuration and can be dependent on device type or priority of its transmission.

### E. Prioritization between multiple UL transmissions due to power limit or UL/DL transmissions

1. In accordance with an embodiment, ambient IoT devices may be triggered to perform multiple UL transmissions simultaneously or can be scheduled to perform UL and receive DL transmissions to/from an intermediate node in a same slot. For example, this can happen due to an ambient IoT device being required to send UL ACK/NACK feedback to multiple DL transmissions, an ambient IoT device having randomly selected resources for multiple UL transport block (TB) transmissions scheduled in a same slot but in different carriers, an ambient IoT device having randomly selected resources for multiple UL TB transmissions scheduled in adjacent slots with insufficient time separation to allow for energy harvesting, or an ambient IoT device randomly selecting a future resource for a UL transmission and then being assigned to receive a DL transmission in the same slot. For example, this can occur if the source is not aware of the resource selected by the ambient IoT device and DL slots are accessible for UL transmissions.

To address these types of issues, methods for resource selection procedure update, prioritization between UL transmissions, and prioritization between UL and DL transmissions are provided.

Resource selection procedure update: When performing a random resource selection, the resource selection procedure can be updated such that slots that are selected for another TB transmission are excluded from the set of candidate resources. In other words, selecting a carrier on a specific slot will exclude all the remaining carriers within the slot from being candidates for random resource selection. A similar approach can be utilized from a gNB or an ambient IoT side in the sense that an ambient IoT device can be assigned only one frequency resource for UL transmission in a given slot. Similarly, the procedure can also be updated to exclude candidate resources that occur in the same slots that are scheduled by a source for DL transmission(s) in the future.

In addition, the resource selection procedure can also be updated to restrict a minimum time separation between two consecutive UL transmissions to allow for energy harvesting depending on the device type. For example, for a type-2a device, a minimum separation of X slots can be applied for any UL transmissions to allow for energy harvesting. The value of X can be either predefined or (pre)-configured. The value can also be selected from a set of predefined or (pre)-configured values based on the required UL power amplification level for this transmission. For example, if no power amplification is required for the UL transmission then the minimum separation between the UL transmissions can be reduced and thus less resources can be excluded from the resource selection process. In this case, for each UL transmission, the resource selection process applied at an ambient IoT or a source should ensure that no other transmissions occur in the X slots preceding the slot selected for the UL transmission.

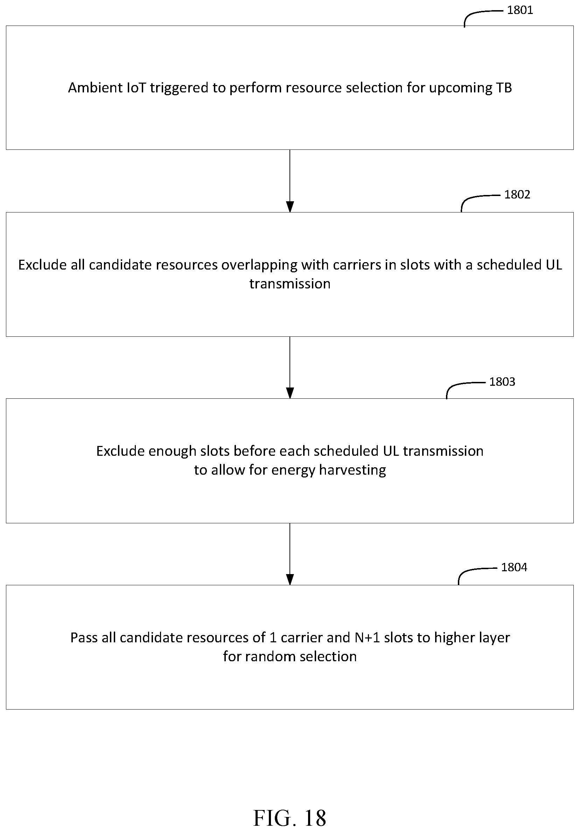

FIG. 18 is a flow chart illustrating a method for resource selection with resource exclusion based on energy harvesting and a power budget, according to an embodiment.

Referring to FIG. 18, in step 1801, an ambient IoT is triggered to perform resource selection for an upcoming TB transmission.

In step 1802, the ambient IoT excludes all candidate resources overlapping with carriers in slots with a scheduled UL transmissions.

In step 1803, the ambient IoT excludes enough slots before each scheduled UL transmission to allow for energy harvesting (e.g., duration may depend on a selected transmission power).

In step 1804, the ambient IoT passes all candidate resources of 1 carrier and N+1 slots to a higher layer for random selection, where N is a time needed for energy harvesting for an upcoming TB transmission.

Prioritization between UL transmissions: Subject to processing time requirements, an ambient IoT device can perform a check before a scheduled transmission at a future slot X (e.g., one or more slots before slot X depending on its processing capabilities) to identify a presence of multiple scheduled UL transmissions in slot X. Subsequently, if a required transmit power of all the UL transmissions exceed a maximum transmit power of the ambient IoT device, it can perform prioritization between the scheduled UL transmissions in slot X. For example, the ambient IoT device can begin by selecting highest priority TB/feedback if its required transmit power is lower than the maximum transmit power allowed for the device. Subsequently, the device can then proceed to check the second highest priority TB/feedback and determine if the remaining UL power budget is sufficient to perform the transmissions and accordingly select it. In this case, in slot X, the device then performs the transmission of the selected UL TB/feedback with their required transmission power.

If two transmissions are scheduled on the same slot and have the same priority, the ambient IoT device can randoTmly select a TB/feedback to be transmitted in the slot. Alternatively, the ambient IoT device can adjust the transmit power of both transmissions such that they can be transmitted without exceeding the maximum transmit power of the device.

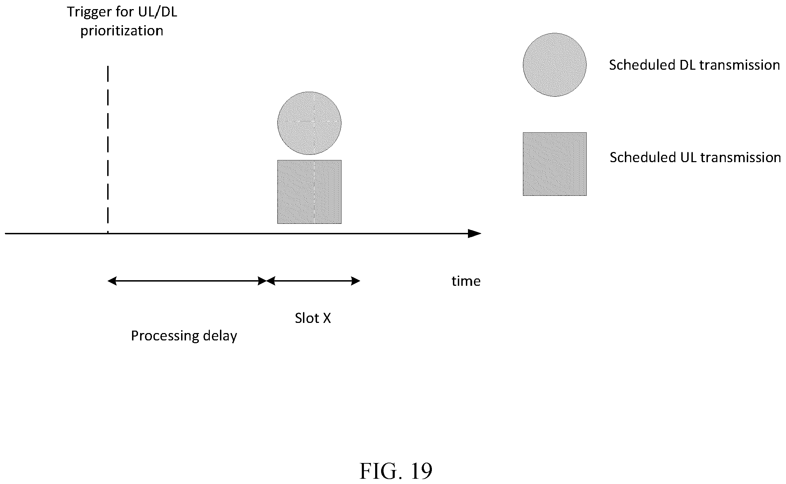

Prioritization between UL and DL transmissions: FIG. 19 illustrates an example of an overlap between UL and DL transmissions at slot X, according to an embodiment.

Referring to FIG. 19, subject to processing time requirements, an ambient IoT device can perform a check before a scheduled UL transmission at a future slot X (e.g., one or more slots before slot X depending on its processing capabilities) to identify the presence of any scheduled DL transmissions in slot X.

Subsequently, if there is an overlap between an UL and DL transmission, the ambient IoT device can perform DL/UL prioritization. For example, the ambient IoT device can prioritize the UL or DL transmissions based on (pre)-configuration.

Alternatively, the ambient IoT device can evaluate priorities of the scheduled DL transmissions based on the information received in the DL control signaling and a priority of the TB that triggered the UL transmission. Subsequently, in slot X, the ambient IoT device may transmit the selected UL TB/feedback if its priority is higher than that of the scheduled DL transmission. If both the UL and DL transmissions have the same priority, the device can randomly select whether to perform a reception or a transmission.

When an ambient IoT device drops a UL transmission due to prioritization (e.g., due to an overlap with an UL/DL transmission with higher priority), it can trigger a resource reselection procedure. This resource reselection procedure can be triggered at the overlapping resource subject to processing time requirements or once an overlap is detected to allow the ambient IoT device to use an earlier alternative resource to reduce latency. In addition, when performing the resource reselection, a priority of a TB that triggered retransmission can be increased to ensure that it can be transmitted within its packet delay budget (i.e., the packet validity time which can be indicated by the higher layer). The amount of priority level increase can be specified or (pre)-configured per resource pool and can be dependent on the number of triggered reselection and/or the remaining packet delay budget.

In accordance with the above-described embodiments, when performing random resource selections by an ambient IoT device or resource selection by a source (e.g., to indicate in DL signaling for future transmission), the selection of a carrier within a slot for UL transmission will exclude the remaining carriers within the same slot from future resource selections.

When performing random resource selections by an ambient IoT device or resource selection by a source (e.g., to indicate in DL signaling for future transmission), a minimum time separation between any consecutive UL transmissions is maintained to allow enough time for energy harvesting. The minimum time separation can be either pre-defined or (pre)-configured and can be dependent on the device type or the required UL power amplification level.

In case of a conflict between two UL transmissions, an ambient IoT device can perform prioritization between two UL transmissions subject to processing time requirements when the maximum available transmit power is not sufficient to perform both transmissions.

When performing a resource reselection for a dropped UL transmission, a priority of a UL transmission can be increased by a (pre)-configured threshold to increase the likelihood of finding resources for the UL transmission within a packet delay budget.

### F. Ambient IoT transmit power capability exchange with the source:

1. To reduce the chances of collisions, resources over which ambient IoT devices perform their UL transmissions can be triggered (and an ambient IoT device randomly selects a resource) or scheduled by a source (e.g., a gNB or an intermediate node).

To further control interference and a near/far problem at a source, the source can control UL transmit power used by an ambient IoT device when it performs its scheduled/triggered UL transmission. However, for a resource selection procedure to operate efficiently and effectively, it is desirable that an ambient IoT device can exchange its capability with the source. In particular, a maximum transmit power that can be used by an ambient IoT device and/or a maximum number of allowed UL transmissions within a (pre)-configured duration can be exchanged between ambient IoT devices and a source.

A maximum transmit power that can be used by an ambient IoT device: This value can be dynamic or static. For example, if an ambient IoT device wants to charge its onboard energy source before transmission, its available amplification power will vary depending on an energizing duration. This restriction can play a key role for UL transmissions in case of closed loop power control in which a source performs energy measurements on UL signals and accordingly schedules the transmit power for subsequent transmissions.

A maximum number of allowed UL transmissions within a (pre)-configured duration: To ensure longevity of an ambient IoT device lifetime, the ambient IoT device can be restricted to a maximum number of UL transmissions within a given duration that is (pre)-configured per resource pool in order to reduce the power consumption. This is mainly applicable to either devices with limited energy storage or devices with no energy harvesting capabilities. In other words, a restriction can be dependent on a device type (e.g., it can be applicable to device Type-2b only).

Alternatively, a restriction can be applicable due to a limitation on power amplification. For example, an ambient IoT device can be allowed a maximum number of UL transmissions with power amplification above a pre-configured threshold within a given duration, whereas it can perform an unlimited number of UL transmissions based on back scattering. This restriction can also be due to the lack of energy needed for power amplification. That is, if two transmissions are too close in time, the ambient IoT device will not have enough time to perform energy harvesting and accordingly might not be able to perform power amplification on the UL signal.

Each ambient IoT device can report its maximum UL transmit power or maximum UL power amplification level to a source. The selection between the maximum transmit power or the amplification power can be dependent on device type (e.g., Type-2a devices can report their maximum amplification level, whereas Type-2b devices can report their maximum transmit power). The reported value can be selected from a set of values that are specified or (pre)-configured per resource pool.

After an ambient IoT device reports its maximum value, a source can then provide an index that is less than or equal to the maximum reported value to control the UL transmission power of the ambient IoT device. The index can be provided as part of DL control signaling used to schedule/trigger UL transmissions. Alternatively, the index can be provided implicitly through an energizing signal, wherein transmitting the energizing signal on a resource (e.g., carrier f1) indicates an index 1, and transmitting the energizing signal on another resource (e.g., carrier f2) indicates an index f2. The index can also be conveyed based on a power level of the energizing signal. Note that the selection of the UL transmit power by the source can be based on the measurements performed on previous UL transmissions (i.e., closed loop power control).

A source may trigger a UL transmission by an ambient IoT device to perform only UL power measurements and accordingly select a transmit power for a subsequent transmission. The UL transmission can be scheduled periodically or aperiodically by the source and used only for power measurements (i.e., if the device does not have any TBs to transmit). The triggering of the UL signal for power measurement can be triggered by a MAC CE or through DL control signaling. Alternatively, the power measurement can be performed on UL signals when the ambient IoT device attempts to perform its first attachment to the source (e.g., when using contention-based approach to identify its presence to convey its ID to the source).

In some scenarios, a source may indicate a reference transmit power that cannot be supported by an ambient IoT device for an extended duration (e.g., in the first transmission before capability exchange).

Alternatively, based on DL channel measurements, an ambient IoT device may estimate that it requires more power to reach a source that might not be available before the intended slot to start a UL transmission (e.g., due to not having enough time to perform energy harvesting or due to a limited strength of the energy harvesting signal).

To address these types of issues, an ambient IoT can adjust its transmission duration based on its available power. In this case, the ambient IoT device may be required to perform a reduced UL transmission that spans a smaller number of slots with the power level indicated by the source. For example, the ambient IoT device can transmit only control signaling on the UL channel or it can transmit control signaling with a segment of the intended TB on the UL.

There may be a minimum duration for the UL transmission to be able to perform a useful transmission (e.g., a preamble and control signaling) and thus an ambient IoT device may elect to drop the UL transmission if the minimum duration and the required transmission power will be higher than its stored energy. This minimum duration can be dependent on the ambient IoT capability and can be exchanged to the source to ensure proper scheduling. Alternatively, this minimum duration can be (pre)-configured or pre-defined.

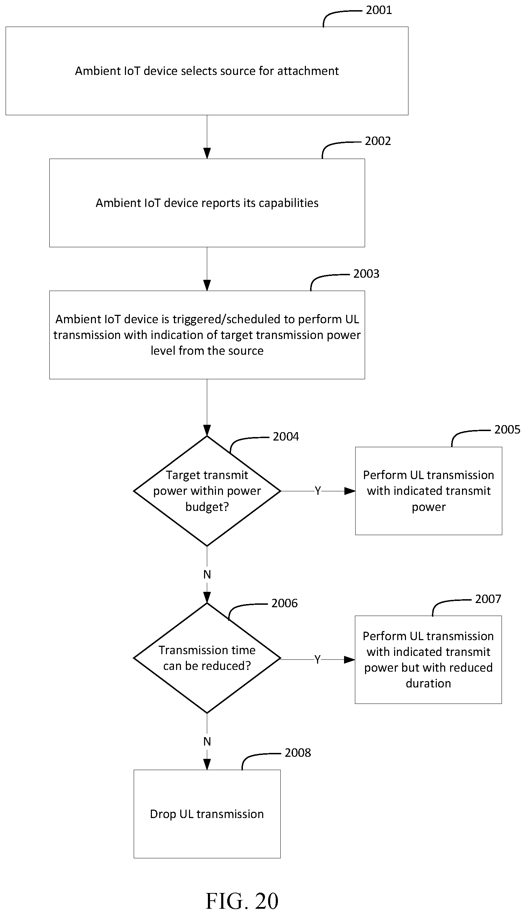

FIG. 20 is a flow chart illustrating a method for ambient IoT device transmit power selection based on a required power level indicated by a source, according to an embodiment.

Referring to FIG. 20, in step 2001, an ambient IoT device selects a source for attachment.

In step 2002, the ambient IoT device reports its capabilities (e.g., device type, maximum transit power, maximum number of allowable transmissions within a duration, etc.).

In step 2003, the ambient IoT device is triggered/scheduled to perform a UL transmission with an indication of target transmission power level from the source (e.g., through DCI or an energizing signal).

In step 2004, the ambient IoT device determines if the target transmission power level is within a power budget of the ambient IoT device.

If the target transmission power level is within the power budget, the ambient IoT device performs a UL transmission with the indicated transmit power in step 2005. However, if the target transmission power level is not within the power budget, the ambient IoT device determines if the transmission time can be reduced in step 2006.

If the transmission time can be reduced, the ambient IoT device performs a UL transmission with the indicated transmit power, but with a reduced duration, in step 2007. However, if the transmission time cannot be reduced, the ambient IoT device drops the UL transmission in step 2008.

In accordance with the above-described embodiments, an ambient IoT device may exchange its maximum transmit power capability and/or maximum number of UL transmissions within a given period to a source to be used for power control purposes.

An ambient IoT device can report its maximum UL transmit power and/or its maximum UL power amplification level depending on a (pre)-configuration.

A source can trigger a UL transmission by an ambient IoT device to perform power measurements and accordingly select an appropriate UL transmission power level in DL control signaling.

An ambient IoT device may reduce its transmission duration if an available power is not sufficient to meet a reference power duration at an intended slot for transmission.

A minimum transmission duration may be subject to ambient IoT device capability and may be exchanged with a source for proper scheduling.

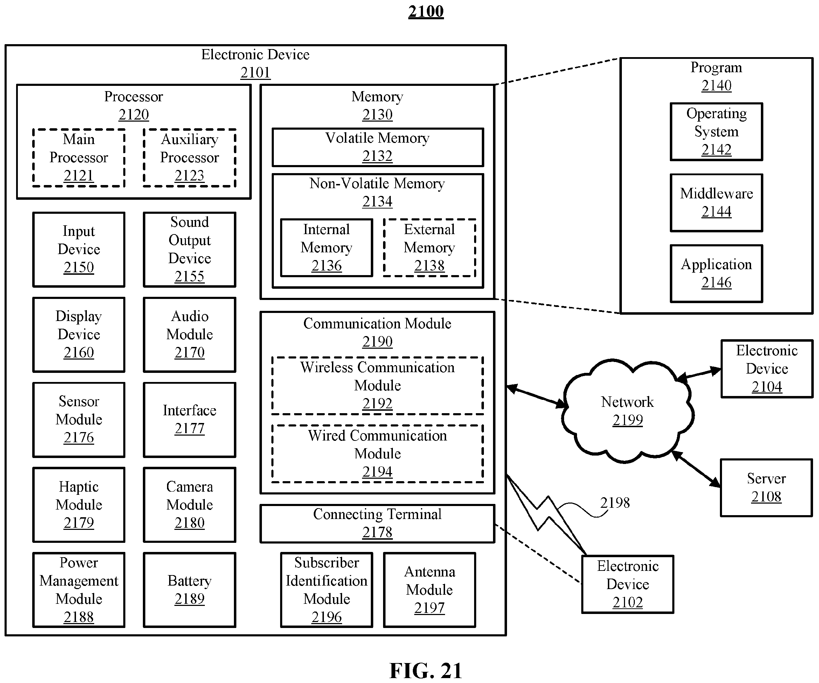

FIG. 21 is a block diagram of an electronic device in a network environment 2100, according to an embodiment.

Referring to FIG. 21, an electronic device 2101 in a network environment 2100 may communicate with an electronic device 2102 via a first network 2198 (e.g., a short-range wireless communication network), or an electronic device 2104 or a server 2108 via a second network 2199 (e.g., a long-range wireless communication network). The electronic device 2101 may communicate with the electronic device 2104 via the server 2108. The electronic device 2101 may include a processor 2120, a memory 2130, an input device 2150, a sound output device 2155, a display device 2160, an audio module 2170, a sensor module 2176, an interface 2177, a haptic module 2179, a camera module 2180, a power management module 2188, a battery 2189, a communication module 2190, a subscriber identification module (SIM) card 2196, or an antenna module 2197. In one embodiment, at least one (e.g., the display device 2160 or the camera module 2180) of the components may be omitted from the electronic device 2101, or one or more other components may be added to the electronic device 2101. Some of the components may be implemented as a single integrated circuit (IC). For example, the sensor module 2176 (e.g., a fingerprint sensor, an iris sensor, or an illuminance sensor) may be embedded in the display device 2160 (e.g., a display).

The processor 2120 may execute software (e.g., a program 2140) to control at least one other component (e.g., a hardware or a software component) of the electronic device 2101 coupled with the processor 2120 and may perform various data processing or computations. For example, the processor 2120 may execute software to control at least one other component of the electronic device 2101 to perform the operations illustrated in FIG. 10, 11, 13!, 13B, 14, 16, 18, or 20.

As at least part of the data processing or computations, the processor 2120 may load a command or data received from another component (e.g., the sensor module 2176 or the communication module 2190) in volatile memory 2132, process the command or the data stored in the volatile memory 2132, and store resulting data in non-volatile memory 2134. The processor 2120 may include a main processor 2121 (e.g., a central processing unit (CPU) or an application processor (AP)), and an auxiliary processor 2123 (e.g., a graphics processing unit (GPU), an image signal processor (ISP), a sensor hub processor, or a communication processor (CP)) that is operable independently from, or in conjunction with, the main processor 2121. Additionally or alternatively, the auxiliary processor 2123 may be adapted to consume less power than the main processor 2121, or execute a particular function. The auxiliary processor 2123 may be implemented as being separate from, or a part of, the main processor 2121.

The auxiliary processor 2123 may control at least some of the functions or states related to at least one component (e.g., the display device 2160, the sensor module 2176, or the communication module 2190) among the components of the electronic device 2101, instead of the main processor 2121 while the main processor 2121 is in an inactive (e.g., sleep) state, or together with the main processor 2121 while the main processor 2121 is in an active state (e.g., executing an application). The auxiliary processor 2123 (e.g., an image signal processor or a communication processor) may be implemented as part of another component (e.g., the camera module 2180 or the communication module 2190) functionally related to the auxiliary processor 2123.

The memory 2130 may store various data used by at least one component (e.g., the processor 2120 or the sensor module 2176) of the electronic device 2101. The various data may include, for example, software (e.g., the program 2140) and input data or output data for a command related thereto. The memory 2130 may include the volatile memory 2132 or the non-volatile memory 2134. Non-volatile memory 2134 may include internal memory 2136 and/or external memory 2138.

The program 2140 may be stored in the memory 2130 as software, and may include, for example, an operating system (OS) 2142, middleware 2144, or an application 2146.

The input device 2150 may receive a command or data to be used by another component (e.g., the processor 2120) of the electronic device 2101, from the outside (e.g., a user) of the electronic device 2101. The input device 2150 may include, for example, a microphone, a mouse, or a keyboard.

The sound output device 2155 may output sound signals to the outside of the electronic device 2101. The sound output device 2155 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 2160 may visually provide information to the outside (e.g., a user) of the electronic device 2101. The display device 2160 may include, for example, a display, a hologram device, or a projector and control circuitry to control a corresponding one of the display, hologram device, and projector. The display device 2160 may include touch circuitry adapted to detect a touch, or sensor circuitry (e.g., a pressure sensor) adapted to measure the intensity of force incurred by the touch.

The audio module 2170 may convert a sound into an electrical signal and vice versa. The audio module 2170 may obtain the sound via the input device 2150 or output the sound via the sound output device 2155 or a headphone of an external electronic device 2102 directly (e.g., wired) or wirelessly coupled with the electronic device 2101.

The sensor module 2176 may detect an operational state (e.g., power or temperature) of the electronic device 2101 or an environmental state (e.g., a state of a user) external to the electronic device 2101, and then generate an electrical signal or data value corresponding to the detected state. The sensor module 2176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 2177 may support one or more specified protocols to be used for the electronic device 2101 to be coupled with the external electronic device 2102 directly (e.g., wired) or wirelessly. The interface 2177 may include, for example, a high- definition multimedia interface (HDMI), a universal serial bus (USB) interface, a secure digital (SD) card interface, or an audio interface.

A connecting terminal 2178 may include a connector via which the electronic device 2101 may be physically connected with the external electronic device 2102. The connecting terminal 2178 may include, for example, an HDMI connector, a USB connector, an SD card connector, or an audio connector (e.g., a headphone connector).

The haptic module 2179 may convert an electrical signal into a mechanical stimulus (e.g., a vibration or a movement) or an electrical stimulus which may be recognized by a user via tactile sensation or kinesthetic sensation. The haptic module 2179 may include, for example, a motor, a piezoelectric element, or an electrical stimulator.

The camera module 2180 may capture a still image or moving images. The camera module 2180 may include one or more lenses, image sensors, image signal processors, or flashes. The power management module 2188 may manage power supplied to the electronic device 2101. The power management module 2188 may be implemented as at least part of, for example, a power management integrated circuit (PMIC).

The battery 2189 may supply power to at least one component of the electronic device 2101. The battery 2189 may include, for example, a primary cell which is not rechargeable, a secondary cell which is rechargeable, or a fuel cell.

The communication module 2190 may support establishing a direct (e.g., wired) communication channel or a wireless communication channel between the electronic device 2101 and the external electronic device (e.g., the electronic device 2102, the electronic device 2104, or the server 2108) and performing communication via the established communication channel. The communication module 2190 may include one or more communication processors that are operable independently from the processor 2120 (e.g., the AP) and supports a direct (e.g., wired) communication or a wireless communication. The communication module 2190 may include a wireless communication module 2192 (e.g., a cellular communication module, a short-range wireless communication module, or a global navigation satellite system (GNSS) communication module) or a wired communication module 2194 (e.g., a local area network (LAN) communication module or a power line communication (PLC) module). A corresponding one of these communication modules may communicate with the external electronic device via the first network 2198 (e.g., a short-range communication network, such as BLUETOOTH^{™}, wireless-fidelity (Wi-Fi) direct, or a standard of the Infrared Data Association (IrDA)) or the second network 2199 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 2192 may identify and authenticate the electronic device 2101 in a communication network, such as the first network 2198 or the second network 2199, using subscriber information (e.g., international mobile subscriber identity (IMSI)) stored in the subscriber identification module 2196.

The antenna module 2197 may transmit or receive a signal or power to or from the outside (e.g., the external electronic device) of the electronic device 2101. The antenna module 2197 may include one or more antennas, and, therefrom, at least one antenna appropriate for a communication scheme used in the communication network, such as the first network 2198 or the second network 2199, may be selected, for example, by the communication module 2190 (e.g., the wireless communication module 2192). The signal or the power may then be transmitted or received between the communication module 2190 and the external electronic device via the selected at least one antenna.

Commands or data may be transmitted or received between the electronic device 2101 and the external electronic device 2104 via the server 2108 coupled with the second network 2199. Each of the electronic devices 2102 and 2104 may be a device of a same type as, or a different type, from the electronic device 2101. All or some of operations to be executed at the electronic device 2101 may be executed at one or more of the external electronic devices 2102, 2104, or 2108. For example, if the electronic device 2101 should perform a function or a service automatically, or in response to a request from a user or another device, the electronic device 2101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 2101. The electronic device 2101 may provide the outcome, with or without further processing of the outcome, as at least part of a reply to the request. To that end, a cloud computing, distributed computing, or client-server computing technology may be used, for example.

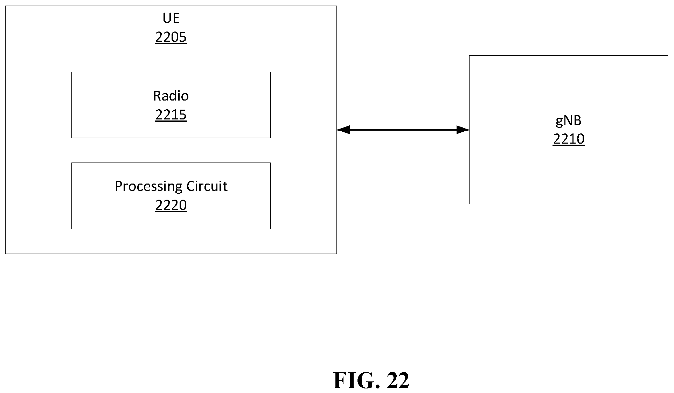

FIG. 22 shows a system including a UE 2205 and a gNB 2210, in communication with each other. The UE may include a radio 2215 and a processing circuit (or a means for processing) 2220, which may perform various methods disclosed herein, e.g., the method illustrated in FIG. 10, 11, 13!, 13B, 14, 16, 18, or 20. For example, the processing circuit 2220 may receive, via the radio 2215, transmissions from the network node (gNB) 2210, and the processing circuit 2220 may transmit, via the radio 2215, signals to the gNB 2210.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. **In** certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. **In** some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

## Claims

1. A method performed by an ambient Internet of things (IoT) device, the method comprising:
receiving, from a reader, a control indication to trigger a device to reader (D2R) transmission and an indication of a target transmission power;
determining if the target transmission power is within a power budget of the ambient IoT device; and
in response to determining that the target transmission power is within the power budget of the ambient IoT device, performing the D2R transmission at the target transmission power.

2. The method of claim 1, wherein the indication of the target transmission power is explicitly indicated in reader to device (R2D) control signaling or implicitly indicated by a carrier wave (CW) from the reader.

3. The method of claim 2, wherein the indication of the target transmission power is implicitly indicated by at least one of a duration or power level of the CW.

4. The method of any one of claims 1 to 3, further comprising repeatedly performing the D2R transmission with different transmit powers,
wherein the different power levels are based on a pre-configuration or an explicit indication from the reader.

5. The method of any one of claims 1 to 4, further comprising monitoring a subset of an available bandwidth for the indication of the target transmission power.

6. The method of claim 5, wherein the available bandwidth is based on a pre-configuration or an explicit indication from the reader.

7. The method of any one of claims 1 to 6, further comprising repeating the D2R transmission according to a hopping pattern.

8. The method of any one of claims 1 to 7, further comprising:
in response to determining that the target transmission power is not within the power budget of the ambient IoT device, determining if a transmission duration can be reduced; and
in response to determining that the transmission duration can be reduced, performing the D2R transmission at the target transmission power for a reduced duration.

9. The method of claim 8, further comprising in response to determining that the transmission duration cannot be reduced, dropping the D2R transmission.

10. The method of any one of claims 1 to 9, further comprising reporting, to the reader, capabilities of the ambient IoT device including at least one of a device type, a maximum transmit power, or a maximum number of transmissions allowed with in a duration.

11. The method of any one of claims 1 to 10, wherein a first resource pool is configured for a first type of ambient IoT device and a second resource pool is configured for a second type of ambient IoT device,
wherein the ambient IoT device is the second type of ambient IoT device,
wherein a priority of the ambient IoT device is greater than a threshold, and
wherein the method further comprises performing another D2R transmission using a resource selected from the first resource pool with a reduced power level, based on the priority of the ambient IoT device being greater than the threshold.

12. An ambient Internet of things (IoT) device, comprising:
a transceiver; and
a processor configured to:
receive, from a reader, via the transceiver, a control indication to trigger a device to reader (D2R) transmission and an indication of a target transmission power,
determine if the target transmission power is within a power budget of the ambient IoT device, and
in response to determining that the target transmission power is within the power budget of the ambient IoT device, performing the D2R transmission, via the transceiver, at the target transmission power.

13. The ambient IoT device of claim 12, wherein the indication of the target transmission power is explicitly indicated in reader to device (R2D) control signaling or implicitly indicated by a carrier wave (CW) from the reader.

14. The ambient IoT device of claim 13, wherein the indication of the target transmission power is implicitly indicated by at least one of a duration or a power level of the CW.

15. The ambient IoT device of any one of claims 12 to 14, wherein the processor is further configured to repeatedly perform the D2R transmission with different transmit powers, and
wherein the different power levels are based on a pre-configuration or an explicit indication from the reader.
